# FASCICULE DE BREVET EUROPEEN

(11) **EP 4 228 964 B1**
(45) Date de publication et mention de la délivrance du brevet: **09.04.2025**
(21) Numéro de dépôt: 20804608.6
(22) Date de dépôt: 16.10.2020
(51) Int. Cl.: B64C 11/00, B64C 11/48, B64D 27/14, F01D 5/32, F01D 25/06, B64C 11/04, F01D 5/30

(54) **ENSEMBLE D'ATTACHE POUR UNE AUBE DE TURBOMACHINE**
BEFESTIGUNGSANORDNUNG FÜR EINE TURBINENMOTORSCHAUFEL
FASTENING ASSEMBLY FOR A TURBINE ENGINE BLADE

(43) Date de publication de la demande: 23.08.2023
(73) Titulaire: SAFRAN AIRCRAFT ENGINES, 75015 Paris (FR)
(72) Inventeur: COURTIER, Vivien, Mickaël, 77550 Moissy-Cramayel (FR); JACQUEMARD, Christophe, Paul, 77550 Moissy-Cramayel (FR); JOUDON, Vincent, 77550 Moissy-Cramayel (FR)
(74) Mandataire: Regimbeau
(86) Numéro de dépôt international: PCT/FR2020/051866
(87) Numéro de publication internationale: WO 2022/079360

(56) Documents cités:
- EP-A1- 1 905 957
- EP-A1- 3 073 054
- WO-A1-2015/057424
- WO-A1-2021/074554
- US-A1- 2010 284 805

## Description

### DOMAINE DE L'INVENTION

La présente invention concerne un ensemble pour une turbomachine servant à fixer une aube d'une telle turbomachine à une attache.

### ETAT DE LA TECHNIQUE

Une soufflante conventionnelle comprend une attache d'aube définissant une alvéole pour recevoir un pied d'une aube. L'attache d'aube comprend deux flancs en regard définissant entre eux un passage donnant dans l'alvéole et formant des butées empêchant le pied de sortir de l'alvéole par le passage. Un pied d'aube peut être engagé dans l'alvéole par deux accès opposés.

Or, dans certaines configurations de soufflante, une aube peut subir un écoulement aérodynamique turbulent, complètement décollé, qui génère une excitation vibratoire sur une large bande. En raison de cette excitation vibratoire, le pied d'aube est susceptible de battre dans l'alvéole dans laquelle ce pied est reçu. Or, un tel battement risque d'endommager l'aube ou l'attache définissant l'alvéole.

Il a été proposé d'insérer dans une telle alvéole une cale avec le pied d'aube, notamment dans le document EP2425100. La cale, déformable, est montée en force dans l'alvéole entre le pied d'aube et l'attache, soit à la main soit avec un maillet. Une telle insertion en force permet à la cale d'être en appui simultanément sur le pied d'aube et sur l'attache selon un effort d'appui d'une masse de l'ordre de 50 kilogrammes, lorsque la soufflante est à l'arrêt. Toutefois, une telle cale n'est pas capable d'empêcher de manière systématique le phénomène de battement susmentionné. En effet, lorsqu'une soufflante est mise en rotation à une vitesse de rotation nominale, le pied d'aube remonte dans l'alvéole sous l'effet de l'effort centrifuge augmentant ainsi l'espace entre celui-ci et le fond de l'alvéole, si bien que l'effort exercé par la cale sur l'attache diminue lorsque la cale revient vers sa géométrie initiale non-contrainte, d'où l'apparition d'un battement du pied de l'aube, voire même d'un rotulage de l'aube.

Le document EP3073054 divulgue un dispositif de serrage et de retenue d'un pied en queue d'aronde d'une aube d'un moteur à turbine à gaz dans une alvéole correspondante s'étendant axialement dans la périphérie d'un disque, le pied étant monté dans l'alvéole par insertion d'une extrémité avant du pied dans une extrémité proximale de l'alvéole puis par coulissement du pied vers une extrémité distale de l'alvéole. Le dispositif comprend un premier corps de serrage présentant une première surface inclinée sur laquelle une surface d'extrémité avant inclinée correspondante du pied glisse lorsque le pied est inséré dans l'alvéole pour pousser l'extrémité avant du pied radialement vers l'extérieur, et un second corps de serrage présentant une seconde surface inclinée, les corps de serrage poussant l'aube radialement vers l'extérieur et retenant le pied axialement dans l'alvéole. Les corps de serrage peuvent avoir des couches extérieures relativement souples sur leurs surfaces inclinées pour un meilleur contact des corps avec le pied.

### EXPOSE DE L'INVENTION

Un but de l'invention est d'empêcher plus efficacement le pied d'une aube de turbomachine de battre, en particulier à une vitesse de rotation élevée.

Il est à cet effet proposé, selon un premier aspect, un ensemble selon la revendication 1 indépendante annexée pour une aube de turbomachine, l'ensemble comprenant :
- une attache définissant une alvéole pour recevoir un pied d'aube, et
- un dispositif de serrage pour serrer le pied d'aube contre l'attache lorsque le pied d'aube est dans l'alvéole, le dispositif de serrage comprenant :
   o au moins un élément de serrage adapté pour venir en appui simultanément sur le pied d'aube et sur l'attache dans l'alvéole de sorte à exercer un effort de serrage sur le pied d'aube, l'élément de serrage définissant un trou taraudé, dans lequel l'élément de serrage comprend une couche élastique agencée pour venir en appui dans l'alvéole sur le pied d'aube,
   o une tige comprenant un filetage coopérant avec le trou taraudé pour qu'une rotation de la tige par rapport à l'élément de serrage entraîne une variation de l'effort de serrage exercé par l'élément de serrage sur le pied d'aube.

Le fait de faire varier l'effort exercé par l'élément de serrage au moyen d'une tige filetée permet d'atteindre des efforts de serrage bien plus élevés que les simples efforts d'appui obtenus en insérant en force une cale à la main ou avec un maillet. Ainsi, même si l'élément de serrage est centrifugé lors de la mise en fonctionnement de la turbomachine, causant ainsi une diminution de l'effort de serrage exercé par l'élément de serrage sur l'attache, cette diminution n'est pas assez importante pour empêcher l'élément de serrage de serrer fermement l'attache. C'est pourquoi l'élément de serrage empêche l'aube de battre même à une vitesse de rotation élevée.

L'élément de couche élastique est compressible pour être mis sous contrainte contre le pied d'aube de manière à maintenir la contrainte en sollicitation de l'aube dont le pied se déplace en centrifuge et/ou lors de sollicitations aérodynamiques. L'effort d'appui à élasticité pour contrainte sous le pied d'aube est environ 10 fois à 20 fois supérieur à l'effort de rappel élastique d'une cale déformable élastique par exemple telle que définie dans le document EP2425100 ou dans le document EP2009245.

L'ensemble selon le premier aspect peut également comprendre les caractéristiques optionelles suivantes, prises seules ou en combinaison selon les revendications dépendantes annexées.

De préférence :
- l'élément de serrage est configuré pour être déplacé par rapport à l'attache lorsque la tige est mise en rotation par rapport à l'attache,
- l'attache et l'élément de serrage présentent des formes adaptées pour que le déplacement de l'élément de serrage par rapport à l'attache cause la variation de l'effort de serrage exercé par l'élément de serrage sur le pied.

De préférence, l'élément de serrage prend appui sur une surface de fond de l'alvéole formant une pente inclinée par rapport à l'axe de rotation de la tige.

De préférence, l'élément de serrage comprend une pièce métallique définissant le trou taraudé.

De préférence, la couche élastique présente une épaisseur allant de 1 millimètre à 4 millimètres.

De préférence, le dispositif de serrage comprend une butée limitant une course de translation de la tige suivant l'axe de rotation de la tige, par rapport à l'attache.

De préférence, l'ensemble comprend un premier verrou empêchant le pied de sortir de l'alvéole, le premier verrou comprenant la butée.

De préférence, la tige comprend une portion d'extrémité adaptée pour être mise en prise avec un outil et être entraînée en rotation par l'outil, la portion d'extrémité étant par exemple cannelée.

De préférence, l'ensemble comprend un dispositif d'anti-rotation adapté pour empêcher une rotation de la tige par rapport à l'attache.

De préférence, le dispositif d'anti-rotation comprend un deuxième verrou empêchant le pied de sortir de l'alvéole.

De préférence, le dispositif d'anti-rotation comprend par ailleurs :
- la portion d'extrémité de la tige,
- une douille amovible adaptée pour être mise en prise avec la portion d'extrémité à la place de l'outil, et pour être simultanément mise en prise avec le deuxième verrou.

De préférence:
- le dispositif de serrage comprend deux éléments de serrage, chaque élément de serrage étant adapté pour venir en appui simultanément sur le pied et sur l'attache dans l'alvéole de sorte à exercer un effort de serrage sur le pied, chaque élément de serrage définissant un trou taraudé,
- la tige comprend deux filetages coopérant respectivement avec les deux trous taraudés pour qu'une rotation de la tige par rapport à l'élément de serrage entraîne une variation de même signe des effort de serrages exercés respectivement par les deux éléments de serrage sur le pied.

De préférence:
- les deux éléments de serrage sont configurés pour être déplacés par rapport à l'attache lorsque la tige est mise en rotation par rapport à l'attache,
- l'attache et les deux éléments de serrage présentent des formes adaptées pour que les déplacements respectifs des deux éléments de serrage par rapport à l'attache causent les variations des efforts de serrage exercés respectivement par les deux éléments de serrage sur le pied.

De préférence, les deux éléments de serrage sont configurés pour s'éloigner ou se rapprocher l'un de l'autre, lorsque la tige est mise en rotation autour de l'axe de rotation par rapport à l'attache.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 est une vue de côté d'un moteur de turbomachine.
- La figure 2 est une vue en perspective de côté d'une attache pour une aube de turbomachine, selon un mode de réalisation.
- La figure 3 est une vue en perspective de côté d'un dispositif de serrage selon un mode de réalisation et des verrous coopérant avec l'attache représentée en figure 2.
- La figure 4 est une vue de dessous du dispositif de serrage et des verrous représentés en figure 3.
- La figure 5 est une vue de dessous détaillant une partie du dispositif de serrage et d'un des verrous représentés en figure 3.
- Les figures 6 à 10 sont des vues de l'attache et du dispositif de serrage à différents stades de leur montage.
- La figure 11 est une vue de côté d'un pied d'aube coopérant avec le dispositif de serrage et les verrous représentés en figure 2.

Sur l'ensemble des figures, les éléments similaires portent des références identiques.

### DESCRIPTION DETAILLEE DE L'INVENTION

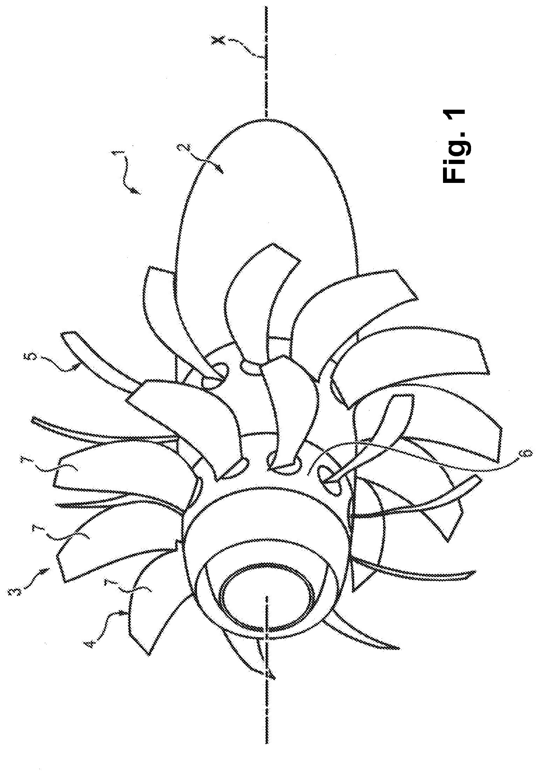

En référence à la **figure 1**, une turbomachine comprend un moteur 1 de type Open Rotor. Le moteur 1 comprend une nacelle 2 destinée à être fixée à un fuselage d'un aéronef, et une soufflante 3 non-carénée. La soufflante 3 comprend deux rotors de soufflante contrarotatifs 4 et 5. Autrement dit, lorsque le moteur 1 est en fonctionnement, les rotors 4 et 5 sont entrainés en rotation par rapport à la nacelle 2 autour d'un même axe de rotation X (qui coïncide avec un axe principal du moteur).

Le moteur 1 tel que représenté sur la figure 1 est en configuration couramment qualifiée de « pusher » (i.e. la soufflante 3 est placée à l'arrière d'un générateur de puissance avec une entrée d'air située en amont, à droite sur la figure 1).

Toutefois, le moteur 1 peut alternativement être en configuration « puller » (i.e. la soufflante est placée en amont du générateur de puissance avec une entrée d'air située avant, entre ou juste derrière les deux rotors de soufflante). Le moteur 1 peut également avoir une architecture encore différente, telles qu'une architecture comprenant un rotor de soufflante comprenant des aubes mobiles et un stator de soufflante comprenant des aubes fixes (configuration USF), ou bien un unique rotor de soufflante (configuration TP). L'invention peut aussi s'appliquer à une turbomachine à soufflante carénée mais également à calage variable.

Sur la figure 1, chaque rotor de soufflante 4, 5 comprend un moyeu 6 monté rotatif par rapport à la nacelle 2 et une pluralité d'aubes 7 fixées au moyeu 6. Les aubes 7 s'étendent sensiblement radialement par rapport à l'axe de rotation X du moyeu.

Dans la présente demande, l'amont et l'aval sont définis par rapport au sens d'écoulement normal du gaz dans le rotor 4, 5 et à travers la turbomachine. Par ailleurs, on appelle axe A du rotor 4, 5, son axe de rotation. La direction axiale correspond à la direction de l'axe A et une direction radiale est une direction perpendiculaire à cet axe et passant par lui. Par ailleurs, la direction circonférentielle correspond à une direction perpendiculaire à l'axe A et ne passant pas par lui. Sauf précision contraire, interne et externe, respectivement, sont utilisés en référence à une direction radiale de sorte que la partie ou la face interne d'un élément est plus proche de l'axe A que la partie ou la face externe du même élément.

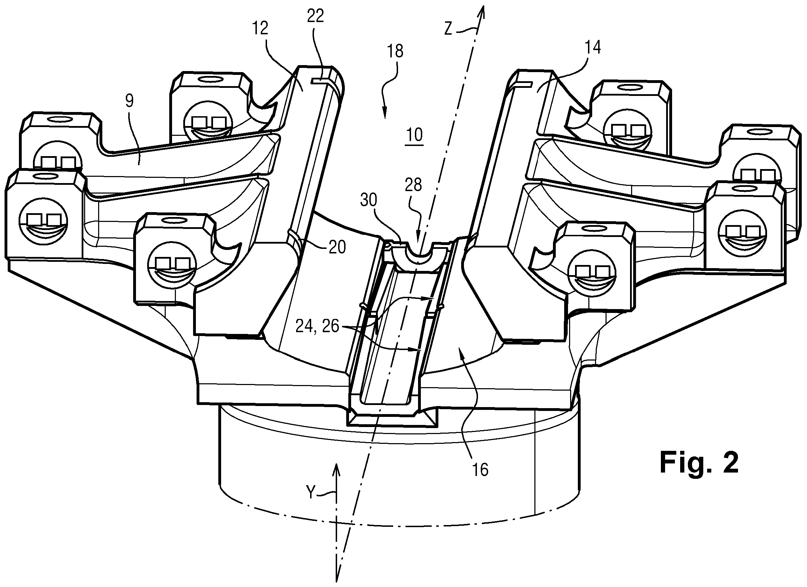

En référence à la **figure 2**, la soufflante 3 comprend, pour une aube 7, une attache 9. L'attache 9 est montée rotative par rapport au moyeu 6 autour d'un axe de calage Y. Plus précisément, l'attache 9 est montée rotative à l'intérieur d'un logement ménagé dans le moyeu 6, par l'intermédiaires de billes ou d'autres éléments roulants.

L'attache 9, pouvant également porter le nom de « pivot » dans la littérature, définit une alvéole 10 pour recevoir un pied de l'aube 7, le pied présentant par exemple une forme en queue d'aronde.

L'attache 9 comprend notamment deux flancs 12, 14 définissent entre eux une ouverture radiale supérieure de l'alvéole 10, opposée à un fond de l'alvéole 10. Les deux flancs 12, 14 sont inclinés l'un vers l'autre et forment des portées.

L'alvéole 10 s'étend dans une direction Z entre deux accès 16, 18 opposés définis par l'attache 9. L'un des deux accès 16, 18 se trouve du côté d'un bord d'attaque de l'aube, et l'autre accès se trouve du côté d'un bord de fuite de l'aube. C'est par l'un ou l'autre de ces accès 16, 18 opposés qu'un pied d'aube peut être engagé en translation dans l'alvéole 10.

Une paire de gorges 20 en regard est formée dans les flancs 12, 14 au niveau de l'accès 16. On verra dans la suite qu'un verrou peut être engagé dans les gorges 20 de sorte à fermer l'accès 16 et d'empêcher un pied d'aube qui se trouve dans l'alvéole 10 de quitter l'alvéole 10.

Une autre paire de gorges 22 en regard est formée dans les flancs 12, 14 au niveau de l'accès 18. On verra dans la suite qu'un autre verrou peut être engagé dans les gorges 20 de sorte à fermer l'accès 18 et d'empêcher un pied d'aube qui se trouve dans l'alvéole 10 de quitter l'alvéole 10 par cet accès 18.

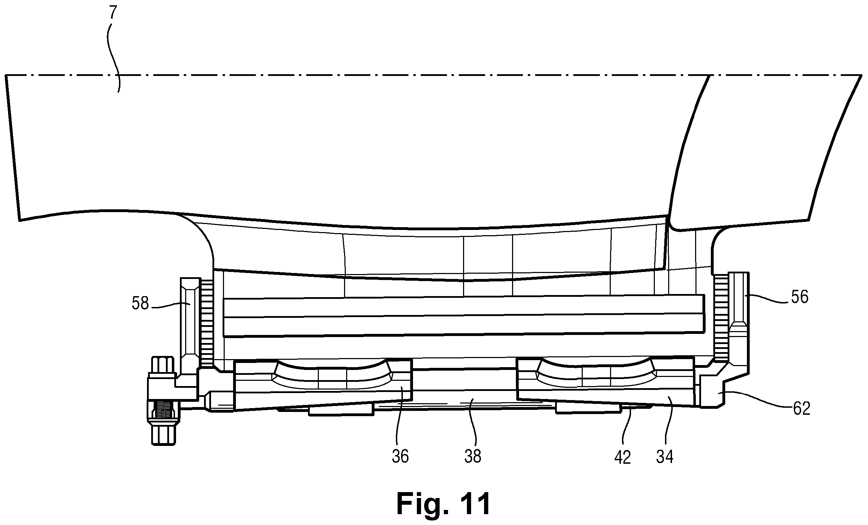

Le fond de l'alvéole 10 comprend deux surfaces de fond 24, 26 présentant des pentes différentes (cela est également visible sur la figure 11).

Chacune des surfaces de fond 24, 26 a par exemple un profil rectiligne dans un plan parallèle au plan (Y, Z). Dans la suite, on appellera profil « sagittal » le profil d'une partie de l'attache dans un plan parallèle au plan (Y, Z).

Dans le mode de réalisation illustré sur les figures, les surfaces de fond 24, 26 sont inclinées l'une par rapport à l'autre de sorte à se rejoindre en un sommet constituant le point le plus proche de l'ouverture radiale supérieure de l'alvéole. En d'autres termes, les surfaces de fond 24, 26 montent vers cette ouverture radiale supérieure lorsqu'on parcourt ces surfaces vers le centre de l'alvéole 10. Dit encore d'une autre manière, ces surfaces de fond 24, 26 descendent lorsqu'on les parcourt vers les deux accès opposés 16, 18 de l'alvéole 10.

L'attache 9 comprend par ailleurs une paroi 28 faisant saillie radialement vers l'extérieur depuis le fond de l'alvéole 10. Cette paroi 28 définit la moitié inférieure d'un orifice.

La paroi 28 présente un sommet délimitant un bord radialement interne de l'accès 18.

Deux trous borgnes 30 débouchent dans le sommet de cette paroi 28. Les deux trous borgnes 30 sont par exemple taraudés.

L'attache 9 est en métal, de préférence en titane.

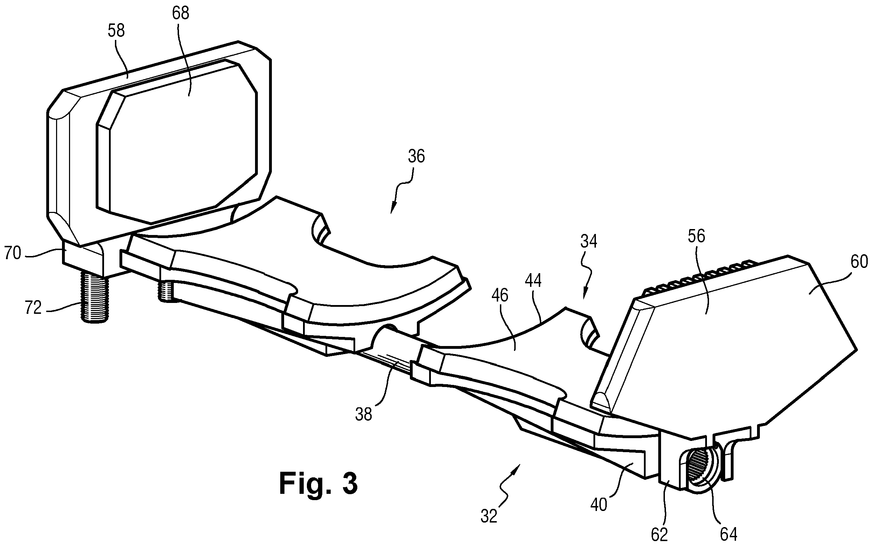

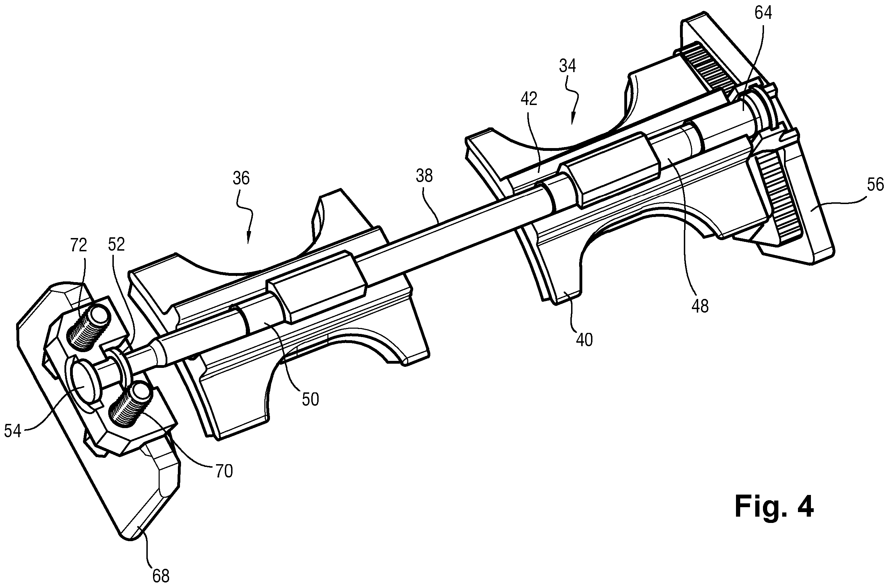

En référence aux **figures 3** **et** **4**, un dispositif de serrage 32 a pour fonction de serrer un pied d'aube contre l'attache 9 lorsque le pied d'aube est reçu dans l'alvéole 10.

Le dispositif de serrage 32 comprend deux éléments de serrage 34, 36 et une tige 38.

L'élément de serrage 34 comprend une pièce 40 définissant un trou taraudé. Cette pièce 40 est en métal ou réalisée dans un matériau composite. La pièce 40 définit une surface inférieure d'appui 42 de l'élément de serrage 34 sur la surface de fond 24.

L'élément de serrage 34 comprend par ailleurs une couche élastique 44, qui définit une surface supérieure d'appui 46 de l'élément de serrage 34 sur un pied d'aube reçu dans l'alvéole 10.

La couche élastique 44 présente par exemple une forme de nid d'abeille.

La couche élastique 44 est de préférence réalisée dans un matériau élastomère ou en fibre de verre.

La couche élastique 44 peut être collée sur la pièce 40, notamment lorsque cette pièce 40 est en métal. Lorsque la pièce 40 est dans un matériau composite, la couche élastique constitue une partie de cette pièce, plus particulièrement dans le cas du nid d'abeille.

La couche élastique 44 présente une épaisseur allant de 1 millimètre à 4 millimètres, préférentiellement de 2 à 3 millimètres. Les surfaces d'appui 42, 46 présentent des profils sagittaux rectilignes, non parallèles.

L'élément de serrage 34 présente une forme globale en « H » de façon à permettre un appui stable sur le pied d'aube moyennant une masse réduite.

L'élément de serrage 36 comprend les mêmes caractéristiques discutées ci-dessus que l'élément de serrage 34. On notera cependant que la surface d'appui inférieure de l'élément 36 est destinée à venir en appui sur la surface de fond 26. Par ailleurs, le trou taraudé de l'élément de serrage 36 est fileté dans un sens inverse du trou taraudé de l'élément de serrage 34.

La tige 38 comprend un filetage 48 coopérant avec le trou taraudé de l'élément de serrage 34, et un filetage 50 coopérant avec le trou taraudé de l'élément de serrage 40. Les deux filetages 48, 50 de la tige 38 s'étendent sur deux tronçons distincts de la tige 38. Les deux filetages sont filetés dans deux sens opposés. Ainsi, une rotation de la tige 38 par rapport aux éléments de serrage 34, 36 entraîne un éloignement ou un rapprochement mutuel des deux éléments de serrage 34, 36 dans une direction parallèle à l'axe de rotation de la tige 38.

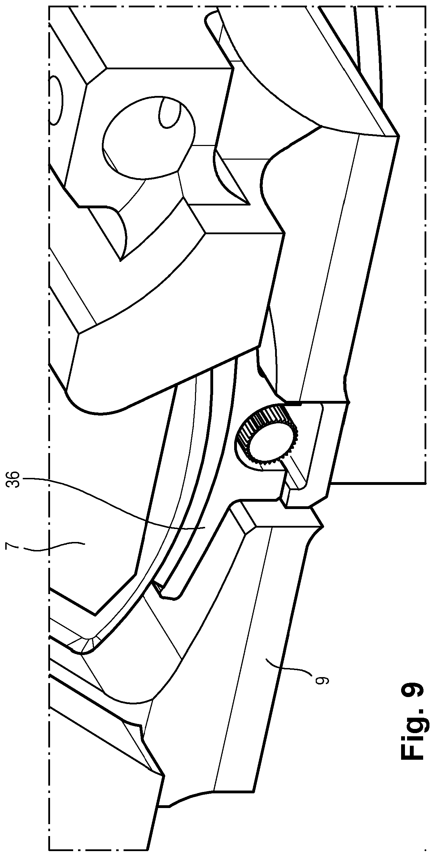

La tige présente une première portion d'extrémité propre à être mise en prise avec un outil, de sorte à être entraînée en rotation par cet outil. A cet effet, la première portion d'extrémité est cannelée (les cannelures sont visibles sur la figure 9).

La tige présente une deuxième portion d'extrémité opposée à la première portion d'extrémité par rapport à ses deux filetages 48, 50.

La deuxième portion d'extrémité comprend deux collerettes 52, 54 à distance l'une de l'autre. Les deux collerettes 52, 54 sont éloignées l'une de l'autre par une distance supérieure à l'épaisseur de la paroi 28 (cette épaisseur étant mesurée parallèlement à l'axe Z).

Sont également illustrés sur les figures 3 et 4 deux verrous 56 et 58.

Le verrou 56 a pour fonction de fermer le premier accès 16 à l'alvéole 10. Le verrou 56 comprend une plaque 60 de forme globalement trapézoïdale adaptée pour coopérer avec les gorges 20 pour assurer cette fermeture. Le verrou 56 comprend par deux pattes 62 faisant saillie depuis la plaque 60. Les deux pattes 58 sont parallèles.

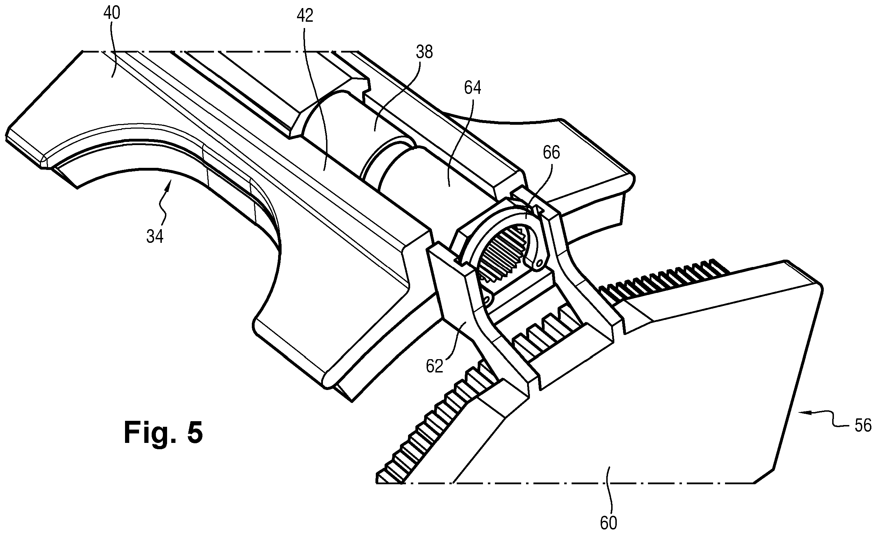

En référence à la **figure 5**, une douille 64 amovible est adaptée pour être mise en prise avec la première portion d'extrémité de la tige 38, en la déplaçant en translation parallèlement à l'axe de la tige 38. La douille 64 présente une surface interne cannelée coopérant avec la première portion d'extrémité de la tige 38, et présente une forme adaptée pour pouvoir entre engagée entre les pattes 62.

Les pattes 62 définissent deux gorges en regard.

En outre, un élément de blocage 66, prenant par exemple la forme d'une bague de frein (« circlips » en anglais) peut prendre appui dans les deux gorges en regard formées dans les pattes 62.

De retour aux figures 3 et 4, le verrou 58 a pour fonction de fermer le deuxième accès 18 de l'alvéole 10. Le verrou 58 comprend une plaque 68 adaptée pour coopérer avec les gorges 22 formées dans l'attache 9 pour assurer cette fermeture. Le verrou 58 comprend par ailleurs une base 70 définissant une moitié supérieure d'orifice.

La base 70 définit par ailleurs deux trous traversants taraudés, et deux vis 72 engagées dans les deux trous traversants taraudés.

Les différents éléments décrits précédemment sont montés ensemble de la manière suivante, en partant de l'attache 9 telle que représentée en figure 2.

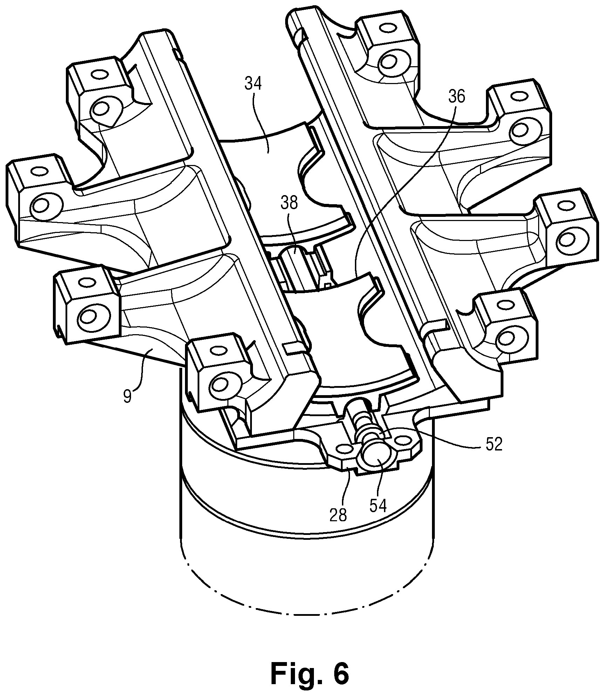

En référence à la **figure 6**, le dispositif de serrage 32 est placé dans l'alvéole 10 de telle sorte que la paroi d'appui inférieure 42 de l'élément de serrage 34 repose sur la surface de fond 24, et que la paroi d'appui inférieure de l'élément de serrage 36 repose simultanément sur la surface de 26.

Par ailleurs, Le dispositif de serrage 32 est placé de telle sorte que la tige 38 traverse le demi-orifice formé par la paroi 28. La paroi 28 est alors entre les deux collerettes 52 et 54. Par ailleurs, la collerette 52 se trouve alors entre la paroi 28 et l'élément de serrage 36.

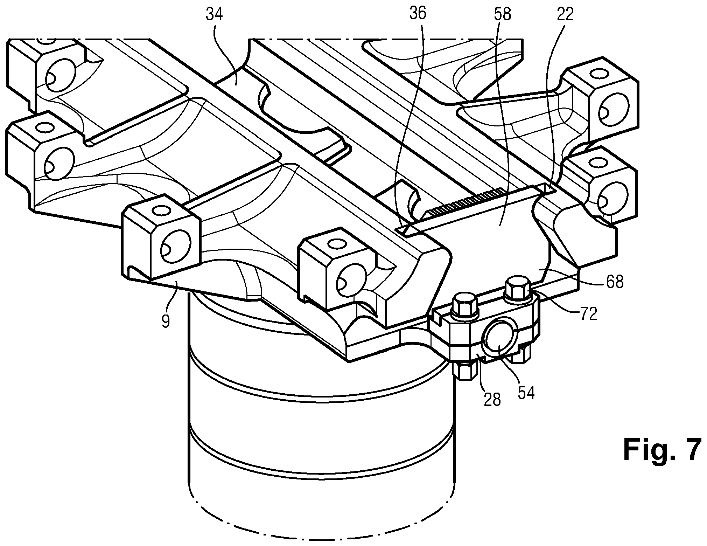

En référence à la **figure 7**, le verrou 58 est ensuite engagé dans les gorges 22, de sorte à fermer l'accès 18 à l'alvéole 10. Les vis 72 sont engagées dans les trous borgnes 30 et vissées dans ces trous 30 de manière à fixer le verrou 58 à l'attache 9.

La base 70 et la paroi 24 définissant alors ensemble un orifice traversé par la tige 38, entre les deux collerettes 52 et 54. Ces quatre éléments, notamment la base 70, constituent ainsi des butées qui limitent chacune la course de déplacement de la tige 38 suivant l'axe Z.

A partir de ce stade, les surfaces de fond 24, 26 forment deux pentes inclinées par rapport à l'axe de rotation de la tige 38.

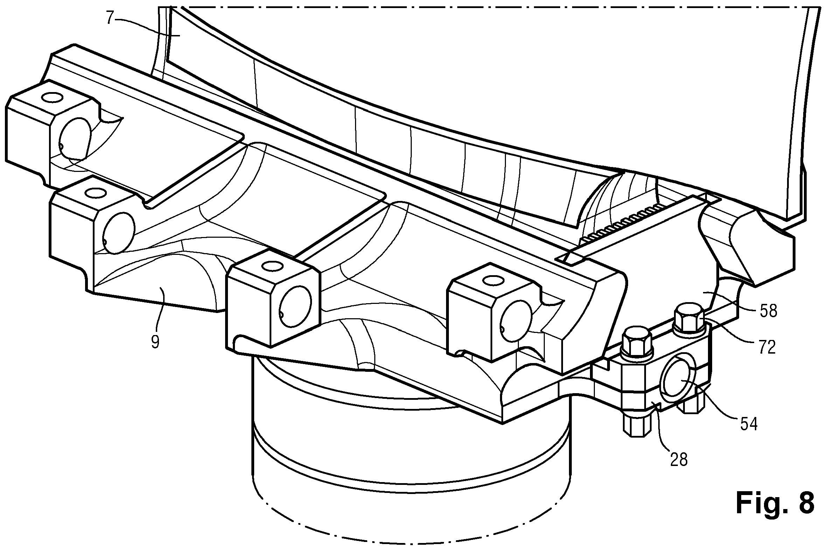

En référence à la **figure 8**, le pied de l'aube 7 est ensuite engagé dans l'alvéole 10 via l'accès 16 laissé ouvert. Le verrou 58 empêche le pied d'aube de sortir de l'alvéole 10 via l'accès 18.

En référence à la **figure 9**, la première portion d'extrémité de la tige 38 est à ce stade toujours accessible depuis l'accès 16.

Un outil (non illustré) est mis en prise avec la première portion d'extrémité de la tige 38. L'outil est manuel ou motorisé. L'outil est ensuite utilisé pour mettre en rotation la tige 38 par rapport à l'attache 9 et aux éléments de serrage 34, 36 dans un premier sens de rotation.

La rotation de la tige 38 dans le premier sens de rotation entraîne un déplacement de l'élément de serrage 34 dans l'alvéole 10 par rapport à l'attache 9. L'élément de serrage 34 monte alors la pente formée par la surface de fond 24, ce qui rapproche l'élément de serrage 34 du pied de l'aube 7 engagé dans l'alvéole 10 et comprime l'élastomère 44 contre le pied d'aube. En d'autres termes, l'effort de serrage exercé par l'élément de serrage 34 est augmenté lorsque la tige est mise en rotation dans le premier sens de rotation. Lorsque la pente formée par la surface de fond 24 est de profil rectiligne, le déplacement de l'élément de serrage 34 par rapport à l'attache 9 est une translation parallèlement à cette pente.

La rotation de la tige 38 dans le premier sens de rotation entraîne par ailleurs un déplacement de l'élément de serrage 36 dans l'alvéole 10 par rapport à l'attache 9. L'élément de serrage 36 monte alors la pente formée par la surface de fond 26, ce qui rapproche l'élément de serrage 36 du pied d'aube engagé dans l'alvéole 10 et comprime l'élastomère de l'élément de serrage 36 contre le pied de l'aube. En d'autres termes, l'effort de serrage exercé par l'élément de serrage 36 est également augmenté lorsque la tige est mise en rotation dans le premier sens de rotation. Lorsque la pente formée par la surface de fond 26 est de profil rectiligne, le déplacement de l'élément de serrage 36 par rapport à l'attache 9 est une translation parallèlement à cette pente.

La tige 38 est ainsi mise en rotation jusqu'à atteindre un effort de serrage sur le pied de l'aube 7 qui soit suffisamment élevé pour empêcher un battement du pied d'aube dans l'alvéole lorsque la turbomachine est en fonctionnement.

Pour réduire cet effort de serrage, il suffit bien entendu de mettre la tige 38 en rotation dans un deuxième sens de rotation opposé au premier sens de rotation mentionné précédemment. Dans ce cas, les deux éléments de serrages descendent le long de leurs pentes respectives 24, 26 et s'éloignent l'un de l'autre, ce qui permet aux élastomères de se détendre.

En définitive, la variation de l'effort exercé par l'élément de serrage 34 sur le pied de l'aube 7 et la variation de l'effort exercé par l'élément de serrage 36 sur le pied de l'aube 7 sont de même signe lors d'une mise en rotation de la tige 38 : soit ces deux efforts augmentent simultanément, soit ces deux efforts diminuent simultanément.

On notera par ailleurs que, lorsque la tige est mise en rotation par un outil, cette tige 38 se déplace légèrement dans une direction radiale, en raison du caractère pentu des surfaces de fond 24 et 28. Bien entendu, l'orifice traversé par cette tige 38 et formé conjointement par la paroi 28 et le verrou 58 est de dimensions adaptées pour autoriser ce déplacement.

En particulier, la couche élastique 44 se combine de manière avantageuse avec la tige 38 et les deux éléments de serrage 34, 36. En effet, la raideur de la tige 38 constitue une précontrainte. Lorsque le pied d'aube s'éloigne radialement, il se produit un relâchement de la précontrainte en traction sur la tige 38 entraînant, en restant en contrainte sous traction, un rapprochement mutuel des éléments de serrage 34, 36 qui suivent alors le pied d'aube.

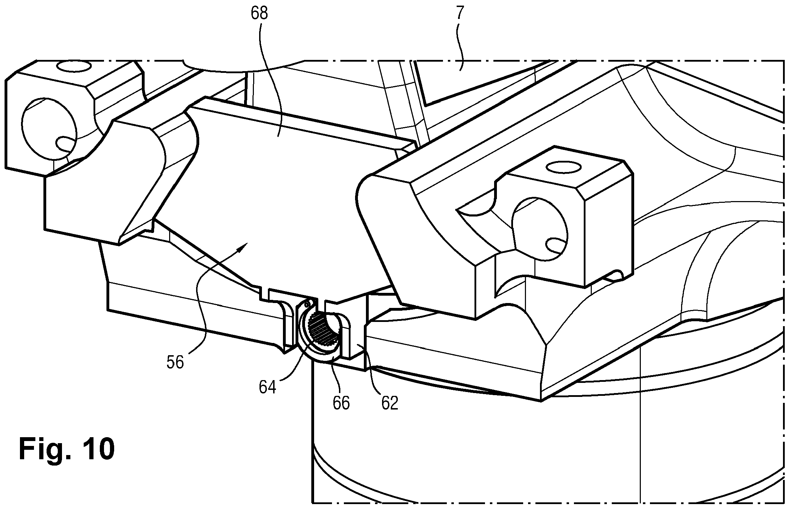

En référence à la **figure 10**, le verrou 56 est ensuite engagé dans les gorges 20 (l'engagement est effectué selon un sens centrifuge, c'est-à-dire de bas en haut sur la figure 10), de sorte à atteindre une position engagée.

Dans la position engagée, le verrou 56 ferme l'accès 16, et empêche ainsi le pied d'aube de sortir de l'alvéole par l'accès 16. Par ailleurs, dans cette position engagée, les deux pattes 62 du verrou 56 définissant entre elles un passage vers la première portion d'extrémité de la tige 38.

La douille 64 est engagée dans ce passage, de manière à coopérer avec cette première portion d'extrémité de la tige 38, en lieu et place de l'outil mentionné précédemment. Dans le même temps, la douille fixe la plaque 68 par rapport à l'attache 9. En outre, les deux pattes 62 bloquent la rotation de la douille 64 par rapport à l'attache 9, et par voie de conséquence la rotation de la tige 38 par rapport à l'attache 9.

En définitive, la première portion d'extrémité de la tige 38, le verrou 58 et la douille 64 forment ensemble un dispositif d'anti-rotation adapté pour empêcher une rotation de la tige 38 par rapport à l'attache 9. Ceci est avantageux, car les fonctions de blocage du pied d'aube dans l'alvéole et d'anti-rotation de la tige sont mise en œuvre moyennant un nombre de pièces réduit.

L'élément de blocage 66 est ensuite engagé dans les deux gorges en regard formées dans les deux pattes 62 pour empêcher une sortie de la douille 64 hors du passage défini entre les deux pattes 62.

L'aube 7 est désormais fermement attachée à l'attache 9, et prête pour utilisation.

En référence à la **figure 11**, il est à remarquer les points suivants :
- L'axe de rotation de la tige 38 est parallèle à la surface du pied d'aube 7 sur laquelle les éléments de serrage 34, 36 prennent appui ;
- Les surfaces d'appui inférieures des éléments de serrage 34, 36 sont inclinées par rapport à l'axe de rotation de la tige 38 et par rapport à la surface du pied d'aube sur laquelle les éléments de serrage prennent appui.

L'ensemble pour turbomachine décrit précédemment au regard des figures annexées peut faire l'objet de variantes. En particulier :
- Bien que la présence de deux éléments de serrage soit avantageuse pour mieux répartir l'effort de serrage sur le pied d'aube, un seul élément de serrage suffit pour permettre d'obtenir un effort de serrage très élevé.
- Lorsque deux éléments de serrage sont présents dans l'alvéole, il peut être prévu que les efforts exercés par ces deux éléments de serrage sur le pied d'aube augmentent lorsque les deux éléments de serrage se rapprochent, comme illustré, ou au contraire lorsqu'ils s'éloignent l'un de l'autre, dans une variante non illustrée. Dans cette variante non illustrée, les deux surfaces de fond sur lesquelles les deux éléments de serrage prennent respectivement appui forment ensemble un creux au centre du fond de l'alvéole.
- Dans le mode de réalisation illustré, l'élastomère presse contre le pied d'aube, ce qui évite d'endommager ce dernier. Il pourrait toutefois être prévu d'agencer cet élastomère contre le fond de l'alvéole 10 dans une variante non illustrée qui n'est pas actuellement revendiquée.

## Revendications

1. Ensemble pour une aube de turbomachine, l'ensemble comprenant :
• une attache (9) définissant une alvéole (10) pour recevoir un pied d'aube (7), et
• un dispositif de serrage (32) pour serrer le pied d'aube (7) contre l'attache (9) lorsque le pied d'aube (7) est dans l'alvéole (10), le dispositif de serrage (32) comprenant :
o au moins un élément de serrage (34) adapté pour venir en appui simultanément sur le pied d'aube (7) et sur l'attache (9) dans l'alvéole (10) de sorte à exercer un effort de serrage sur le pied d'aube (7), l'élément de serrage (34) définissant un trou taraudé, dans lequel l'élément de serrage comprend une couche élastique agencée pour venir en appui dans l'alvéole sur le pied d'aube (7) et pour être compressée par le pied d'aube (7) lorsque l'effort de serrage est exercé,
o une tige (38) comprenant un filetage coopérant avec le trou taraudé pour qu'une rotation de la tige (38) par rapport à l'élément de serrage entraîne une variation de l'effort de serrage exercé par l'élément de serrage sur le pied d'aube (7).

2. Ensemble selon la revendication précédente, dans lequel :
• l'élément de serrage (34) est configuré pour être déplacé par rapport à l'attache (9) lorsque la tige (38) est mise en rotation par rapport à l'attache (9),
• l'attache (9) et l'élément de serrage (34) présentent des formes adaptées pour que le déplacement de l'élément de serrage (34) par rapport à l'attache (9) cause la variation de l'effort de serrage exercé par l'élément de serrage (34) sur le pied.

3. Ensemble selon l'une quelconque des revendications précédentes, dans lequel l'élément de serrage (34) prend appui sur une surface de fond (24) de l'alvéole (10) formant une pente inclinée par rapport à l'axe de rotation de la tige (38).

4. Ensemble selon l'une quelconque des revendications précédentes, dans lequel l'élément de serrage (34) comprend une pièce (40) métallique définissant le trou taraudé.

5. Ensemble selon l'une quelconque des revendications précédentes, dans lequel la couche élastique présente une épaisseur allant de 1 millimètre à 4 millimètres.

6. Ensemble selon l'une quelconque des revendications précédentes, dans lequel le dispositif de serrage (32) comprend une butée (70) limitant une course de translation de la tige (38) suivant l'axe de rotation de la tige (38), par rapport à l'attache (9).

7. Ensemble selon la revendication précédente, comprenant un premier verrou (56) empêchant le pied de sortir de l'alvéole (10), le premier verrou (56) comprenant la butée (70).

8. Ensemble selon l'une quelconque des revendications précédentes, dans lequel la tige (38) comprend une portion d'extrémité adaptée pour être mise en prise avec un outil et être entraînée en rotation par l'outil, la portion d'extrémité étant par exemple cannelée.

9. Ensemble selon l'une quelconque des revendications précédentes, comprenant un dispositif d'anti-rotation adapté pour empêcher une rotation de la tige (38) par rapport à l'attache (9).

10. Ensemble selon la revendication précédente, dans lequel le dispositif d'anti-rotation comprend un deuxième verrou (58) empêchant le pied de sortir de l'alvéole (10).

11. Ensemble selon les revendications 8, 9 et 10 prises en combinaison, dans lequel le dispositif d'anti-rotation comprend par ailleurs :
• la portion d'extrémité de la tige (38),
• une douille (64) amovible adaptée pour être mise en prise avec la portion d'extrémité à la place de l'outil, et pour être simultanément mise en prise avec le deuxième verrou.

12. Ensemble selon l'une quelconque des revendications précédentes, dans lequel :
• le dispositif de serrage (32) comprend deux éléments de serrage (34, 36), chaque élément de serrage étant adapté pour venir en appui simultanément sur le pied et sur l'attache (9) dans l'alvéole (10) de sorte à exercer un effort de serrage sur le pied, chaque élément de serrage définissant un trou taraudé,
• la tige (38) comprend deux filetages coopérant respectivement avec les deux trous taraudés pour qu'une rotation de la tige (38) par rapport à l'élément de serrage entraîne une variation de même signe des effort de serrages exercés respectivement par les deux éléments de serrage sur le pied.

13. Ensemble selon la revendication précédente, dans lequel :
• les deux éléments de serrage (34, 36) sont configurés pour être déplacés par rapport à l'attache (9) lorsque la tige (38) est mise en rotation par rapport à l'attache (9),
• l'attache (9) et les deux éléments de serrage présentent des formes adaptées pour que les déplacements respectifs des deux éléments de serrage par rapport à l'attache (9) causent les variations des efforts de serrage exercés respectivement par les deux éléments de serrage sur le pied.

14. Ensemble selon l'une quelconque des revendications 12 et 13, dans lequel les deux éléments de serrage (34, 36) sont configurés pour s'éloigner ou se rapprocher l'un de l'autre, lorsque la tige (38) est mise en rotation autour de l'axe de rotation par rapport à l'attache (9).

15. Ensemble selon l'une quelconque des revendications précédentes, dans lequel la couche élastique est réalisé dans un élastomère ou en fibre de verre.

## Patentansprüche

1. Anordnung für eine Turbomaschinenschaufel, wobei die Anordnung umfasst:
• eine Befestigung (9), die eine Vertiefung (10) zur Aufnahme eines Schaufelfußes (7) definiert, und
• eine Spannvorrichtung (32) zum Spannen des Schaufelfußes (7) gegen die Befestigung (9), wenn sich der Schaufelfuß (7) in der Vertiefung (10) befindet, wobei die Spannvorrichtung (32) umfasst:
o mindestens ein Spannelement (34), das geeignet ist, gleichzeitig am Schaufelfuß (7) und an der Befestigung (9) in der Vertiefung (10) anzuliegen, so dass eine Spannkraft auf den Schaufelfuß (7) ausgeübt wird, wobei das Spannelement (34) ein Gewindeloch definiert, wobei das Spannelement eine elastische Schicht umfasst, die eingerichtet ist, um in der Vertiefung am Schaufelfuß (7) anzuliegen und um von dem Schaufelfuß (7) komprimiert zu werden, wenn die Spannkraft ausgeübt wird,
o eine Stange (38), die ein Gewinde umfasst, das mit dem Gewindeloch zusammenwirkt, so dass eine Drehung der Stange (38) relativ zum Spannelement eine Veränderung der Spannkraft bewirkt, die durch das Spannelement auf den Schaufelfuß (7) ausgeübt wird.

2. Anordnung nach vorhergehendem Anspruch, wobei:
• das Spannelement (34) ausgelegt ist, um relativ zur Befestigung (9) verlagert zu werden, wenn die Stange (38) relativ zur Befestigung (9) gedreht wird,
• die Befestigung (9) und das Spannelement (34) Formen aufweisen, die geeignet sind, dass die Verlagerung des Spannelements (34) relativ zur Befestigung (9) die Veränderung der Spannkraft bewirkt, die vom Spannelement (34) auf den Fuß ausgeübt wird.

3. Anordnung nach einem der vorhergehenden Ansprüche, wobei das Spannelement (34) an einer Bodenfläche (24) der Vertiefung (10) anliegt, die eine geneigte Schräge relativ zur Drehachse der Stange (38) bildet.

4. Anordnung nach einem der vorhergehenden Ansprüche, wobei das Spannelement (34) ein Metallteil (40) umfasst, das das Gewindeloch definiert.

5. Anordnung nach einem der vorhergehenden Ansprüche, wobei die elastische Schicht eine Dicke von 1 Millimeter bis 4 Millimeter aufweist.

6. Anordnung nach einem der vorhergehenden Ansprüche, wobei die Spannvorrichtung (32) einen Anschlag (70) umfasst, der einen Translationsweg der Stange (38) gemäß der Drehachse der Stange (38) relativ zur Befestigung (9) begrenzt.

7. Anordnung nach vorhergehendem Anspruch, umfassend einen ersten Riegel (56), die verhindert, dass der Fuß aus der Vertiefung (10) heraustritt, wobei der erste Riegel (56) den Anschlag (70) umfasst.

8. Anordnung nach einem der vorhergehenden Ansprüche, wobei die Stange (38) einen Endabschnitt umfasst, der geeignet ist, mit einem Werkzeug in Eingriff zu kommen und von dem Werkzeug gedreht zu werden, wobei der Endabschnitt beispielsweise geriffelt ist.

9. Anordnung nach einem der vorhergehenden Ansprüche, umfassend eine Anti-Rotationsvorrichtung, die geeignet ist, eine Drehung der Stange (38) relativ zum Befestigungselement (9) zu verhindern.

10. Anordnung nach vorhergehendem Anspruch, wobei die Anti-Rotationsvorrichtung einen zweiten Riegel (58) umfasst, der verhindert, dass der Fuß aus der Vertiefung (10) heraustritt.

11. Anordnung nach den Ansprüchen 8, 9 und 10 in Kombination, wobei die Anti-Rotationsvorrichtung übrigens umfasst:
• den Endabschnitt der Stange (38),
• eine abnehmbare Hülse (64), die geeignet ist, anstelle des Werkzeugs mit dem Endabschnitt in Eingriff gebracht zu werden und gleichzeitig mit dem zweiten Riegel in Eingriff gebracht zu werden.

12. Anordnung nach einem der vorhergehenden Ansprüche, wobei:
• die Spannvorrichtung (32) zwei Spannelemente (34, 36) umfasst, wobei jedes Spannelement geeignet ist, gleichzeitig am Fuß und an der Befestigung (9) in der Vertiefung (10) anzuliegen, so dass eine Spannkraft auf den Fuß ausgeübt wird, wobei jedes Spannelement ein Gewindeloch definiert,
• die Stange (38) zwei Gewinde umfasst, die jeweils mit den beiden Gewindelöchern zusammenwirken, damit eine Drehung der Stange (38) relativ zum Spannelement eine Veränderung der Spannkräfte, die jeweils von den beiden Spannelementen auf den Fuß ausgeübt werden, mit gleichem Vorzeichen bewirkt.

13. Anordnung nach vorhergehendem Anspruch, wobei:
• die beiden Spannelemente (34, 36) ausgelegt sind, um relativ zur Befestigung (9) verlagert zu werden, wenn der Stange (38) relativ zur Befestigung (9) in Drehung versetzt wird,
• die Befestigung (9) und die beiden Spannelemente Formen aufweisen, die geeignet sind, damit die jeweiligen Verlagerungen der beiden Spannelemente relativ zur Befestigung (9) die Veränderungen der Spannkräfte bewirken, die jeweils von den beiden Spannelementen auf den Fuß ausgeübt werden.

14. Anordnung nach einem der Ansprüche 12 und 13, wobei die beiden Spannelemente (34, 36) ausgelegt sind, um sich voneinander zu entfernen oder einander anzunähern, wenn der Stange (38) relativ zur Befestigung (9) um die Drehachse gedreht wird.

15. Anordnung nach einem der vorhergehenden Ansprüche, wobei die elastische Schicht aus einem Elastomer oder aus Glasfaser hergestellt ist.

## Claims

1. An assembly for a turbomachine blade, the assembly comprising:
• a fastener (9) defining a recess (10) for receiving a blade root (7), and
• a clamping device (32) for clamping the blade root (7) against the clip (9) when the blade root (7) is in the recess (10), the clamping device (32) comprising :
o at least one clamping element (34) adapted to bear simultaneously on the blade foot (7) and on the fastener (9) in the recess (10) so as to exert a clamping force on the blade foot (7), the clamping element (34) defining a tapped hole, wherein the clamping element comprises a resilient layer arranged to bear in the recess on the blade root (7) and to be compressed by the blade root (7) when the clamping force is exerted,
o a rod (38) comprising a thread cooperating with the tapped hole so that rotation of the rod (38) relative to the clamping element causes a variation in the clamping force exerted by the clamping element on the blade root (7).

2. Assembly according to the preceding claim, in which :
• the clamping element (34) is configured to be moved relative to the clamp (9) when the rod (38) is rotated relative to the clamp (9),
• the clamp (9) and the clamping element (34) are shaped so that movement of the clamping element (34) relative to the clamp (9) causes the clamping force exerted by the clamping element (34) on the foot to vary.

3. Assembly according to any one of the preceding claims, in which the clamping element (34) rests on a bottom surface (24) of the cell (10) forming a slope inclined with respect to the axis of rotation of the rod (38).

4. An assembly according to any one of the preceding claims, wherein the clamping element (34) comprises a metal part (40) defining the tapped hole.

5. Assembly according to any one of the preceding claims, in which the elastic layer has a thickness ranging from 1 millimetre to 4 millimetres.

6. Assembly according to any one of the preceding claims, in which the clamping device (32) comprises a stop (70) limiting a translational travel of the rod (38) along the axis of rotation of the rod (38), relative to the fastener (9).

7. Assembly according to the preceding claim, comprising a first lock (56) preventing the foot from leaving the recess (10), the first lock (56) comprising the stop (70).

8. An assembly according to any one of the preceding claims, wherein the rod (38) comprises an end portion adapted to be engaged with a tool and rotated by the tool, the end portion being for example splined.

9. Assembly according to any one of the preceding claims, comprising an anti-rotation device adapted to prevent rotation of the rod (38) relative to the fastener (9).

10. Assembly according to the preceding claim, in which the anti-rotation device comprises a second lock (58) preventing the foot from leaving the socket (10).

11. An assembly according to claims 8, 9 and 10 taken in combination, wherein the anti-rotation device further comprises:
• the end portion of the rod (38),
• a removable sleeve (64) adapted to be engaged with the end portion in place of the tool, and to be simultaneously engaged with the second lock.

12. Assembly according to any one of the preceding claims, in which :
• the clamping device (32) comprises two clamping elements (34, 36), each clamping element being adapted to bear simultaneously on the foot and on the fastener (9) in the socket (10) so as to exert a clamping force on the foot, each clamping element defining a threaded hole,
• the rod (38) comprises two threads cooperating respectively with the two tapped holes so that rotation of the rod (38) relative to the clamping element causes a variation of the same sign in the clamping forces exerted respectively by the two clamping elements on the foot.

13. Assembly according to the preceding claim, in which :
• the two clamping elements (34, 36) are configured to be moved relative to the clamp (9) when the rod (38) is rotated relative to the clamp (9),
• the clamp (9) and the two clamping elements have shapes adapted so that the respective displacements of the two clamping elements relative to the clamp (9) cause variations in the clamping forces exerted respectively by the two clamping elements on the foot.

14. Assembly according to any one of claims 12 and 13, in which the two clamping elements (34, 36) are configured to move away from or towards each other when the rod (38) is rotated about the axis of rotation relative to the fastener (9).

15. Assembly according to any one of the preceding claims, in which the elastic layer is made of an elastomer or glass fibre.
